# EUROPEAN PATENT SPECIFICATION

(11) **EP 0 741 180 B1**
(45) Date of publication and mention of the grant of the patent: **02.10.2002**
(21) Application number: 96250085.6
(22) Date of filing: 15.04.1996
(51) Int. Cl.: C10G 11/05, B01D 53/86, B01J 23/63, B01J 23/66, B01J 23/83, B01J 37/04

(54) **Compositions for reduced NOx and combustion promotion in FCC processes**
Zusammensetzungen für verminderten NOx und Verbrennungspromotor in katalytischen Wirbelschicht-Krackverfahren
Compositions pour NOx réduite et promoteur de combustion dans des procédés de craquage catalytique fluidisé

(30) Priority: 05.05.1995 US 437123; 05.05.1995 US 435687
(43) Date of publication of application: 06.11.1996
(73) Proprietor: W.R. GRACE & CO.-CONN., New York New York 10036 (US)
(72) Inventor: Peters, Alan Winthrop, Ashton, Maryland 20861 (US); Rudeshill, John A., Columbia, MD 21044 (US); Weatherbee, Gordon D., Columbia, MD 21045 (US); Rakiewicz, Edward F., Sykesville, MD 21784 (US); Mary Jane Barbato-Grauso, Dayton MD 21797 (US); Xinjin Zhao, Woodbine, MD 21797 (US)
(74) Representative: UEXKÜLL & STOLBERG

(56) References cited:
- EP-A- 0 045 170
- EP-A- 0 721 796
- WO-A-87/06157
- WO-A-87/06158
- WO-A-94/19427
- WO-A-95/03876
- DE-C- 3 830 319
- US-A- 4 626 419

## Description

### BACKGROUND OF THE INVENTION

Public policy and cost/benefit pressures have created an increasing desire to reduce the amount of polluting gases released by industrial processes. As a result, there has been a drive to find ways of decreasing pollution by modifying industrial processes.

In the petroleum refining industry, fluid catalytic cracking (FCC) of hydrocarbons is a commonly used petroleum refining method. In an FCC process, catalyst particles (inventory) are repeatedly circulated between a catalytic cracking zone and a catalyst regeneration zone. In regeneration, coke deposits (from the cracking reaction) on the catalyst particles are removed at elevated temperatures by oxidation. The removal of coke deposits restores the activity of the catalyst particles to the point where they can be reused in the cracking reaction.

While FCC processes are efficient from the point of catalyst use, the regeneration step typically results in the evolution of undesirable gases such as SOₓ, CO, and NOₓ. Various attempts have been made to limit the amounts of these gases created during the FCC regeneration step or otherwise to deal with the gases after their formation. Most typically, additives have been used either as an integral part of the FCC catalyst particles themselves or as separate admixture particles in the FCC catalyst inventory in attempts to deal with these problematic gases. For example, magnesium aluminate spinel additives are often used to prevent or minimize emission of SOₓ from the regenerator.

Various noble metal catalysts have been used to minimize the emission of CO from the regenerator by promoting combustion of CO to CO₂. Unfortunately, the combustion promoter additives typically used to control CO emissions typically cause a dramatic increase (e.g., 300%) in NOₓ evolution from the regenerator. Some of the spinel-based (SOₓ reduction) additives act to lessen the amount of NOₓ emission, but with limited success.

Thus, there remains a need for more effective NOₓ control via development of more effective NOₓ control additives suitable for use in FCC processes and/or combustion promoter compositions which do not cause significant NOₓ formation in the first place.

### SUMMARY OF THE INVENTION

The invention provides compositions suitable for use in FCC processes which are capable of providing superior NOₓ control performance, as well as compositions which are capable of promoting CO combustion while avoiding significant NOₓ formation.

In one aspect, the invention provides compositions for reducing NOₓ emissions in FCC processes, the compositions comprising a component containing (i) an acidic oxide support, (ii) an alkali metal and/or alkaline earth metal or mixtures thereof, (iii) a transition metal oxide having oxygen storage capability, and (iv) a transition metal selected from Groups Ib and/or llb of the Periodic Table. The acidic oxide support preferably contains silica alumina. Ceria is the preferred oxygen storage oxide. Cu and Ag are preferred Group I/IIb transition metals.

In another aspect, the invention provides compositions for promoting CO combustion in FCC processes, the compositions comprising a component containing (i) an acidic oxide support, (ii) an alkali metal and/or alkaline earth metal or mixtures thereof, (iii) a transition metal oxide having oxygen storage capability, and (iv) palladium. The acidic oxide support preferably contains silica alumina. Ceria is the preferred oxygen storage oxide.

In another aspect, the invention encompasses FCC processes using the NOₓ reduction compositions and combustion promoter compositions of the invention either as an integral part of the FCC catalyst particles themselves or as separate admixture particles in the FCC catalyst inventory.

These and other aspects of the invention are described in further detail below.

### DETAILED DESCRIPTION OF THE INVENTION

The invention encompasses the discovery that certain classes of compositions are very effective in FCC processes to reduce NOₓ gas emissions and/or to promote CO combustion with minimum formation of NOₓ. The compositions of the invention are characterized in that they comprise in accordance with claim 1 a component containing (i) an acidic oxide support, (ii) an alkali metal and/or alkaline earth metal or mixtures thereof, (iii) a transition metal oxide having oxygen storage capability, and (iv) a transition metal selected from Groups Ib and/or IIb of the Periodic Table (IUPAC) or palladium. Where the composition is to be used as a combustion promoter, (iv) is preferably palladium.

The acidic oxide support preferably contains acidic silanol or bridged hydroxyl groups. These acid groups are preferably characterized by NMR shifts in the region of -90 to -100 ppm compared to a TMS (trimethyl silane) standard. The support may be crystalline or amorphous. The acidic oxide support contains at least some alumina. The oxide support contains at least 50 wt.% alumina. The oxide support is an oxide selected from the group consisting of alumina, silica alumina, and lanthana alumina. Amorphous silica aluminas are most preferred. Where an amorphous silica alumina support is used, the support preferably has an alumina to silica molar ratio of about 3-50:1. The acidic oxide support preferably has a surface area of at least 50 m²/g, more preferably about 70-200 m²/g.

The alkali and/or alkaline earth metal may be any alkali metal, alkaline earth metal or combinations thereof. The NOₓ reduction and/or combustion promoter component preferably contains an alkali metal selected from sodium, potassium and mixtures thereof. The amount of alkali/alkaline earth metal present in the NOₓ reduction and/or combustion promoter component of the invention is about 1-10 parts by weight (measured as alkali/alkaline earth metal oxide) per 100 parts by weight of the oxide support material. While the alkali/alkaline earth metal content is expressed as the amount of corresponding oxide, preferably the alkali/alkaline metal is present in cationic form rather than as discrete oxide.

The transition metal oxide having oxygen storage capability may be any transition metal oxide having oxygen storage capability similar to that of ceria. Preferably, at least a portion of the oxygen storage oxide is ceria. More preferably, the oxygen storage oxide consists essentially of ceria. Other non-stoichiometric metal oxides having known oxygen storage capability may also be used. The oxygen storage oxide is preferably present as a microdispersed phase as opposed to large bulk oxide particles or ions located at exchange sites in the oxide support. The amount of the oxygen storage oxide present in the NOₓ reduction and/or combustion promoter component may be varied considerably relative to the amount of acidic oxide support. The NOₓ reduction and/or combustion promoter component contains 1-50 part by weight of oxygen storage oxide per 100 parts by weight of the oxide support material.

For NOₓ control, the Group Ib and/or IIb transition metal may be any metal or combination of metals selected from those groups of the Periodic Table. Preferably, the transition metal is selected from the group consisting of Cu, Ag and mixtures thereof. The amount of transition metal present is preferably at least about 100 parts by weight (measured as metal oxide) per million parts of the oxide support material, furthermore about 0.1-5 parts by weight per 100 parts of the oxide support material.

For combustion promotion, the palladium component is preferably present at least about 100 parts by weight (measured as metal) per million parts of the oxide support material, more preferably about 0.05-5 parts by weight per 100 parts of the oxide support material.

The NOₓ reduction component and/or combustion promoter component may contain minor amounts of other materials which preferably do not adversely affect the NOₓ reduction and/or combustion promotion function in a significant way. More preferably, however, the NOₓ reduction component and/or combustion promoter component consists essentially of items (i) - (iv) mentioned above. Where the composition of the invention is used as an additive particle for an FCC process, the NOₓ reduction and/or combustion promoter component may be combined with fillers (e.g. clay, silica, alumina or silica alumina particles) and/or binders (e.g. silica sol, alumina sol, silica alumina sol, etc.) to form particles suitable for use in an FCC process. Preferably, any added binders or fillers used do not significantly adversely affect the performance of NOₓ reduction component and/or combustion promoter component.

Where the NOₓ reduction and/or combustion promoter component is used as an additive particulate (as opposed to being integrated into the FCC catalyst particles themselves), the amount of NOₓ reduction and/or combustion promoter component in the additive particles is preferably at least 50 wt.%, more preferably at least 75 wt.%. Most preferably, the additive particles consist entirely of the NOₓ reduction and/or combustion promoter component. The additive particles are preferably of a size suitable for circulation with the catalyst inventory in an FCC process. The additive particles have an average particle size of about 20-200 µm. The additive particles preferably have a Davison attrition index (Dl) value of about 0-45, more preferably about 0-15.

If desired, the NOₓ reduction and/or combustion promoter component of the invention may be integrated into the FCC catalyst particles themselves. In such case, any conventional FCC catalyst particle components may be used in combination with the NOₓ reduction and/or combustion promoter component-of the invention. If integrated into the FCC catalyst particles, the NOₓ reduction and/or combustion promoter component of the invention preferably represents at least about 0.02 wt.% of the FCC catalyst particle, more preferably about 0.1-10 wt.%.

While the invention is not limited to any particular method of manufacture, the NOₓ reduction and/or combustion promoter component of the invention is preferably made by the following procedure:
(a) impregnate the acidic oxide porous support particles with an alkali/alkaline earth metal oxide source and an oxygen storage oxide source to achieve the desired alkalilalkaline earth metal and oxygen storage oxide content,
(b) calcine the impregnated support of step (a),
(c) impregnate the calcined support from step (b) with a source of Group Ib/llb metal or palladium metal, and
(d) calcine the impregnated support from step (c).

The sources of alkali/alkaline earth metal oxide and oxygen storage oxide are preferably slurries, sols and/or solutions of the metal oxides themselves or salts of the respective metals which decompose to oxides on calcination or combinations of oxides and salts. If desired, the individual constituents may be separately added to the support particles with a calcination step in between each addition. If desired, the impregnated particles are spray dried before the calcination of step (d). The calcination steps are preferably performed at about 450-750°C.

The NOₓ reduction and/or combustion promoter component may be used as a separate additive particle or as an integral part of an FCC catalyst particle. If used as an additive, the NOₓ reduction and/or combustion promoter component may itself be formed into particles suitable for use in an FCC process. Alternatively, the NOₓ reduction and/or combustion promoter component may be combined with binders, fillers, etc. by any conventional technique. See, for example, the process described in U.S. Patent 5,194,413, the disclosure of which is incorporated herein by reference.

Where the NOₓ reduction and/or combustion promoter component of the invention is integrated into an FCC catalyst particle, preferably the component is first formed and then combined with the other constituents which make up the FCC catalyst particle. Incorporation of the NOₓ reduction and/or combustion promoter component directly into FCC catalyst particles may be accomplished by an known technique. Example of suitable techniques for this purpose are disclosed in U.S. Patents 3,957,689; 4,499,197; 4,542,118 and 4,458,023, the disclosures of which are incorporated herein by reference.

The compositions of the invention may be used in any conventional FCC process. Typical FCC processes are conducted reaction temperatures of 450 to 650°C with catalyst regeneration temperatures of 600 to 850°C. The compositions of the invention may be used in FCC processing of any typical hydrocarbon feedstock. Preferably, the NOₓ reduction components of the invention are used in FCC processes involving the cracking of hydrocarbon feedstocks which contain above average amounts of nitrogen, especially residual feedstocks or feedstocks having a nitrogen content of at least 0.1 wt.%. The amount of the NOₓ reduction and/or combustion promoter component of the invention used may vary depending on the specific FCC process. Preferably, the amount of NOₓ reduction and/or combustion promoter component used (in the circulating inventory) is about 0.1-15 wt.% based on the weight of the FCC catalyst in the circulating catalyst inventory. The presence of the NOₓ reduction and/or combustion promoter component of the invention during the FCC process catalyst regeneration step dramatically reduces the level of NOₓ and/or CO emitted during regeneration.

The following examples are presented to further illustrated the invention. The invention is not limited to the specific details of the examples.

### Example 1

An amorphous silica alumina particulate support containing 6 wt.% silica was impregnated with a sodium carbonate solution, dried and calcined to achieve a 3.6 wt.% Na content measured as Na₂O based on the weight of the silica alumina. The Na-containing silica alumina particles were then impregnated with a solution of cerium nitrate and then dried to achieve a ceria content of about 1 wt.% based on the weight of the silica alumina particles. The Ce-containing composition was then impregnated with a silver nitrate solution to achieve a silver content of about 5 wt.% (oxide basis) based on the weight of the silica alumina particles. The impregnated particles were then dried and calcined at about 704°C to form a particulate composition in accordance with the invention.

### Example 2

An amorphous silica alumina particulate support containing 6 wt.% silica was impregnated with a sodium carbonate solution, dried and calcined to achieve a 6 wt.% Na content measured as Na₂O based on the weight of the silica alumina. The Na-containing silica alumina particles were then impregnated with a solution of cerium nitrate and then dried to achieve a ceria content of about 22 wt.% based on the weight of the silica alumina particles. The Ce-containing composition was then impregnated with a copper nitrate solution to achieve a copper content of about 2 wt.% (oxide basis) based on the weight of the silica alumina particles. The impregnated particles were then dried and calcined at about 704°C to form a particulate composition in accordance with the invention.

### Example 3

The 152 g of the composition of example 1 was admixed with 2908 grams of a commercial FCC catalyst (Grace Davison Orion® 842 equilibrium catalyst (ECAT)) and 10 g of a combustion promoter (Grace Davison CP-5). The admixture was then used to crack a hydrocarbon feedstock containing 0.3 wt.% nitrogen in a DCR pilot plant FCC unit. The cracking was performed at a 75% conversion rate and 1000g/hr catalyst feed rate. As a control example, the same catalyst admixture was run without the composition of example 1. The NOₓ emission measured from the FCC unit regenerator was 65% less when the composition of example 1 was used compared to the control example.

### Example 4

The 10 g of the composition of example 2 was admixed with 2000 grams of a commercial FCC catalyst (Grace Davison Orion® 922G ECAT) and 5 g of a combustion promoter (Grace Davison CP-5). The admixture was then used to crack a Countrymark hydrocarbon feedstock (0.13 wt.% N) in an FCC pilot plant (DCR) unit. The cracking was performed at a 75% conversion rate and 1000g/hr catalyst feed rate. As a control example, the same catalyst admixture was run without the composition of example 2. The NOₓ emission measured from the FCC unit regenerator was 46% less when the composition of example 2 was used compared to the control example.

### Example 5

A silica alumina particulate support containing 6 wt.% silica was impregnated sodium carbonate solution, dried and calcined to achieve 6 wt.% Na measured as Na₂O based on the weight of the silica alumina. The Na-containing silica alumina particles were then impregnated with a solution of cerium nitrate and then dried to achieve a ceria content of about 22 wt.% based on the weight of the silica alumina particles. The ceria-containing compositions were then impregnated with a palladium nitrate solution to achieve a palladium content of about 0.1 wt.% based on the weight of the silica alumina particles. The impregnated particles were then dried and calcined at about 704°C to form a particulate composition in accordance with the invention.

### Example 6

The 10 g of the composition of example 5 was admixed with 2000 grams of a commercial FCC catalyst (Grace Davison Orion® 922G ECAT). The admixture was then used to crack a Countrymark hydrocarbon feedstock in an FCC pilot plant (DCR) unit. The cracking was performed at a 75% conversion rate and 1000g/hr catalyst feed rate. As a comparison example, the same catalyst was run without the composition of example 5. The NOₓ emission measured from the FCC unit regenerator was substantially unchanged when the composition of example 5 was used compared to the control example. The composition of example 5 had CO combustion activity greater than or comparable to typical commercial combustion promoters.

## Claims

1. A particulate composition suitable for use in a fluidized catalytic cracking process to control the emissions of NOₓ while simultaneously promoting CO combustion, said composition having a particle size of about 20-200 µm and comprising:
(i) an acidic oxide support containing at least 50 wt.% alumina and selected from alumina, silica alumina and lanthana alumina,
(ii) 1-10 parts by weight, measured as alkali metal oxide and/or alkaline earth metal oxide, of an alkali metal and/or alkaline earth metal or mixtures thereof,
(iii) 1-50 parts by weight of a transition metal oxide having oxygen storage capability, and
(iv) 0.01-5 parts by weight of a transition metal selected from the groups Ib and/or IIb of the Periodic Table (the amount measured as metal oxide) or palladium,
all of said parts by weight being per 100 parts by weight of said acidic oxide support material.

2. The composition of claim 1 wherein said acidic oxide support is alumina.

3. The composition of claim 1 wherein said acidic oxide support is silica alumina.

4. The composition of claim 3 wherein said silica alumina has an alumina:silica mole ratio of about 3-50:1.

5. The composition of claim 1 wherein said oxygen storage oxide contains ceria and said component contains an alkali metal selected from the group consisting of sodium, potassium, and mixtures thereof.

6. The composition of claim 1 wherein said component (iv) contains group Ib transition metal selected from the group consisting of copper, silver, and mixtures thereof.

7. The composition of claim 1 wherein said component (iv) contains palladium.

8. A fluid cracking catalyst comprising (a) a cracking component suitable for use in cracking of hydrocarbons, and (b) a component containing a composition according to any of claims 1-7.

9. The cracking catalyst of claim 8 wherein said cracking catalyst comprises a particulate admixture of component (a) and component (b).

10. A method of cracking a hydrocarbon feedstock into lower molecular weight components, said method comprising contacting said hydrocarbons with a cracking catalyst according to any of claims 8 and 9, at elevated temperature whereby said lower molecular weight components are formed.

11. The method of claim 10 wherein said catalyst is fluidized during said contacting and said method further comprises recovering used cracking catalyst from said contacting step and treating said used catalyst under conditions suitable to regenerate said catalyst.

## Patentansprüche

1. Teilchenförimge Zusammensetzung, die zur Verwendung in einem katalylitischen Fließbett-Crackverfahren zur Kontrolle der NOₓ-Emissionen und gleichzeitig zur Förderung der CO-Verbrennung geeignet ist und eine Teilchengröße von etwa 20-200 µm besitzt, enthaltend
(i) einen sauren Oxidträgermaterial, das mindestens 50 Gew.% Aluminiumoxid ausgewählt aus Aluminiumoxid, Siliziumoxid-Aluminiumoxid und Lanthanoxid-Aluminiumoxid enthält,
(ii) 1-10 Gewichtsteile eines Alkalimetalls und/oder Erdalkalimetalls oder Mischungen davon, gemessen als Alkalimetalloxid und/oder Erdalkalimetalloxid,
(iii) 1-50 Gewichtsteile eines Übergangsmetalloxids mit Sauerstofflagerungsfähigkeit und
(iv) 0.01-5 Gewichtsteile eines Übergangsmetalls ausgewählt aus den Gruppen Ib und/oder IIb des Periodensystems (gemessen als Metalloxid) oder Palladium,
wobei sich alle Gewichtsteile auf 100 Gewichtsteile des sauren Oxidträgermaterials beziehen.

2. Zusammensetzung nach Anspruch 1, in der das saure Oxidträgermaterial Aluminiumoxid ist.

3. Zusammensetzung nach Anspruch 1, in der das saure Oxidträgermaterial Siliziumoxid-Aluminiumoxid ist.

4. Zusammensetzung nach Anspruch 3, in der das Siliziumoxid-Aluminiumoxid ein Siliziumoxid-Aluminiumoxid-Molverhältnis von etwa 3-50:1 besitzt.

5. Zusammensetzung nach Anspruch 1, in der das Sauerstofflagerungsoxid Cer und die Verbindung ein Alkalimetall ausgewählt aus der Gruppe bestehend aus Natrium, Kalium und Mischungen davon enthält.

6. Zusammensetzung nach Anspruch 1, in der die Verbindung (iv) Gruppe-Ib Übergangsmetall enthält, das ausgewählt ist aus der Gruppe bestehend aus Kupfer, Silber und Mischungen davon.

7. Zusammensetzung nach Anspruch 1, in der die Verbindung (iv) Palladium enthält.

8. Ein Fließbett-Crackkatalysator, der (a) eine zur Verwendung zum Cracken von Kohlenwasserstoffen geeignete Crack-Komponente und (b) eine Komponente enthält, die eine Zusammensetzung gemäß einem der Ansprüche 1-7 enthält.

9. Crackkatalysator nach Anspruch 8, der eine teilchenförmige Mischung von Komponente (a) und Komponente (b) enthält.

10. Verfahren zum Cracken eines Kohlenwasserstoff-Einsatzmaterials in Komponenten mit niedrigerem Molekulargewicht, bei dem die Kohlenwasserstoffe mit einem Crackkatalysator gemäß einem der Ansprüche 8 oder 9 bei erhöhter Temperatur unter Bildung der Komponenten mit niedrigerem Molekulargewicht in Kontakt gebracht werden.

11. Verfahren nach Anspruch 10, bei dem der Katalysator während des Kontaktierens fluidisiert wird und weiterhin gebrauchter Katalysator vom Kontaktierungsschritt gewonnen und der gebrauchte Katalysator unter geeigneten Bedingungen behandelt wird, um den Katalysator zu regenerieren.

## Revendications

1. Une composition sous forme de particules convenant à l'utilisation dans un procédé de craquage catalytique fluidisé pour réguler les émissions de NOₓ, tout en favorisant simultanément la combustion de CO, ladite composition présentant une dimension de particules d'environ 20-200 µm et comprenant:
i) un support d'oxyde acide contenant au moins 50% en poids d'alumine et choisi parmi l'alumine, la silice alumine et l'oxyde de lanthane alumine,
ii) 1 à 10 parties en poids, exprimées en oxyde de métal alkalin et/ou oxyde de métal alcalino-terreux, d'un métal alcalin et/ou d'un métal alcalino-terreux, ou de leurs mélanges,
iii) 1 à 50 parties en poids d'un oxyde de métal de transition ayant des capacités de stockage de l'oxygène et
iv) 0,01-5 parties en poids d'un métal de transition choisi dans le groupe la et/ou IIb du tableau périodique (la quantité étant mesurée en oxyde de métal, ou de palladium)
toutes lesdites parties en poids étant exprimées pour 100 parties en poids dudit matériau de support d'oxyde acide.

2. La composition selon la revendication 1, dans laquelle ledit support oxyde acide est l'alumine.

3. La composition selon la revendication 1, dans laquelle ledit support oxyde acide est la silice alumine.

4. La composition selon la revendication 3, dans laquelle ladite silice alumine présente un rapport molaire alumine/silice d'environ 3-50/1.

5. La composition selon la revendication 1, dans laquelle ledit oxyde de stockage de l'oxygène contient de l'oxyde de cérium et ledit composant contient un métal alcalin choisi dans le groupe consistant en sodium, potassium, et leurs mélanges.

6. La composition selon la revendication 1 dans laquelle ledit composant (iv) contient un métal de transition du groupe Ib choisi dans le groupe consistant en cuivre/argent et leurs mélanges.

7. La composition selon la revendication 1 dans laquelle ledit composant (iv) contient du palladium.

8. Un catalyseur de craquage en fluidisé comprenant
(a) un composant de craquage qui convient pour servir dans le craquage des hydrocarbures et
(b) un constituant contenant une composition selon une quelconque des revendications 1 à 7.

9. Le catalyseur de craquage selon la revendication 8 dans laquelle ledit catalyseur de craquage comprend un mélange sous forme de particules du composant (a) et du composant (b).

10. Un procédé de craquage d'une charge hydrocarbonée en composants de masse moléculaire plus faible, ledit procédé comprenant la mise en contact desdits hydrocarbures avec un catalyseur de craquage selon une quelconque des revendications 8 et 9, à température élevée, permettant ainsi la formation desdits composants à masse moléculaire plus basse.

11. Le procédé selon la revendication 10, dans lequel ledit catalyseur est fluidisé au cours dudit contact et ledit procédé comprend en outre la récupération du catalyseur de craquage usé provenant de l'étape de contact et le traitement dudit catalyseur usé dans des conditions qui conviennent pour la régénération dudit catalyseur.
